# EUROPÄISCHE PATENTSCHRIFT

(11) **EP 0 670 187 B1**
(45) Veröffentlichungstag und Bekanntmachung des Hinweises auf die Patenterteilung: **29.07.1998**
(21) Anmeldenummer: 95102537.8
(22) Anmeldetag: 22.02.1995
(51) Int. Cl.: B09B 1/00

(54) **Verfahren zum Nachverdichten des Volumens einer Mülldeponie**
Method for densifying the volume of a waste dump
Procédé pour densifier le volume d'une décharge

(30) Priorität: 04.03.1994 DE 4407290; 04.03.1994 DE 4407291
(43) Veröffentlichungstag der Anmeldung: 06.09.1995
(73) Patentinhaber: KELLER GRUNDBAU GmbH, 63067 Offenbach (DE)
(72) Erfinder: Esters, Klaus, Dipl.-Ing., D-45219 Essen (DE); Raabe, Ernst-Werner-Ing., D-44227 Dormund (DE); Danner, Berthold, A-4172 St. Johann am Wimberg (AT); Hofbauer, Josef, A-4173 St. Veit im Mühlkreis (AT); Priebe, Heinz, D-29389 Bodenteich (DE)
(74) Vertreter: Zeitler & Dickel

(56) Entgegenhaltungen:
- DE-C- 4 234 112
- DE-U- 9 301 680
- US-A- 3 835 652

## Beschreibung

Die Erfindung betrifft ein Verfahren zum Nachverdichten des Volumens einer Mülldeponie gemäß dem Oberbegriff des Anspruchs 1.

Mülldeponien sind aus Umwelt-, wirtschaftlichen und politischen Gründen nicht beliebig erweiterbar, so daß der zur Verfügung stehende Deponieraum grundsätzlich als knapp anzusehen ist und einen maximalen Nutzungsgrad erfordert. Dies bedeutet, daß ein größtmögliches Deponievolumen bei kleinster in Anspruch genommener Fläche zur Verfügung stehen soll.

Aus DE 42 34 112 C1 ist bereits ein Verfahren bekannt, bei dem bestehende Mülldeponien durch "Müllstopfen" nachverdichtet werden. Bei diesem bekannten Verfahren wird ein Tiefenstopfgerät in der Form von Rohrelementen oder eines Tiefenrüttlers in den Deponiekörper eingerammt bzw. eingerüttelt, wodurch eine Verdichtung des anliegenden, Hohlräume und Poren aufweisenden Müllmaterials bewirkt wird und Aufnahmelöcher im bestehenden Deponiekörper geschaffen werden, in die weiterer Müll hineingestopft werden kann.

Dieses Verfahren eignet sich ausgezeichnet zur Schaffung zusätzlichen Deponieraums ohne Vergrößerung der Mülldeponiefläche. Da hierbei jedoch der zusätzliche Müll im Inneren des Tiefenstopfgeräts bis zum Fußbereich geleitet und von dort beim Hochziehen des Tiefenstopfgeräts in das geschaffene Aufnahmeloch unter gleichzeitigem Verpressen ausgebracht wird, sind spezielle Tiefenstopfgeräte mit einem entsprechenden Innenlumen erforderlich.

Der Erfindung liegt daher die Aufgabe zugrunde, ein Verfahren zu schaffen, mit dem das Verstopfen von Müll auf möglichst einfache und wirkungsvolle Weise durchgeführt werden kann.

Diese Aufgabe wird durch das erfindungsgemäße Verfahren gemäß Anspruch 1 gelöst. Vorteilhafte Ausführungsformen der Erfindung sind in den weiteren Ansprüchen angegeben.

Beim erfindungsgemäßen Verfahren wird zunächst ein Aufnahmeloch im Deponiekörper durch Einrütteln oder Einrammen einer Müllverdrängungseinrichtung von der Deponieoberfläche her ausgebildet und dann diese Müllverdrängungseinrichtung aus dem Aufnahmeloch gezogen. Anschließend wird weiteres Müllmaterial in den Bereich der Öffnung des Aufnahmelochs zugeführt, das dann durch Absenken des Tiefenstopfgeräts in das Aufnahmeloch verstopft wird.

Zuvor wird hierbei derjenige Anteil des in den Bereich der Öffnung des Aufnahmelochs zugeführten Müllmaterials, der neben dem Aufnahmeloch liegt, mittels einer Schiebe- oder Schwenkeinrichtung in den Bereich des Aufnahmelochs geschoben. Hierdurch kann sofort wieder weiteres Müllmaterial durch erneutes Absenken des Tiefenstopfgeräts in das Aufnahmeloch eingestopft werden.

Eine sehr effektive Arbeitsweise ergibt sich, wenn das Müllmaterial mittels einer in einer entsprechenden Schräglage angeordneten oder in eine solche bringbaren Zufuhreinheit selbständig dem Bereich des Aufnahmelochs zugeführt wird. Als Zuführeinheit wird hierbei vorteilhafterweise eine langgestreckte, oberseitig offene Halbrinne verwendet, die beispielsweise in der Nähe des Aufnahmelochs ein Schwenklager aufweist und mittels eines am anderen Ende befestigten Seilzuges von einer waagrechten in eine Schräg- oder Vertikalposition hochgezogen werden kann.

Erfindungsgemäß wird das weitere Müllmaterial vor dem Verstopfen in das Aufnahmeloch vorverdichtet. Dies bietet den Vorteil, daß pro Stopfvorgang mehr Müllmaterial in das Aufnahmeloch verstopft werden kann und die Effektivität des Stopfverfahrens erheblich gesteigert wird.

Diese Vorverdichtung kann bereits beim Aufnehmen des Müllmaterials, d.h., bevor das Müllmaterial dem Aufnahmeloch oder dem Tiefenstopfgerät zugeführt wird, durchgeführt werden. Hierzu wird vorteilhafterweise das Müllmaterial mittels des Polypgreifers eines Baggers aufgenommen, wobei die einzelnen polypartigen Arme des Baggergreifers das Müllmaterial zusammenpressen.

Zusätzlich oder alternativ hierzu kann die Vorverdichtung des Müllmaterials auch durch Zusammenschieben einer Schiebeeinrichtung mit beidseits des Aufnahmelochs angeordneten Verdichtungselementen durchgeführt werden. Eine derartige Schiebeeinrichtung stellt eine Art Presse dar, die das Müllmaterial über dem Aufnahmeloch zusammendrückt.

Die Verdichtungselemente können hierbei vorteilhafterweise aus ebenen Platten oder konkaven, insbesondere halbschalenförmigen Bogenelementen bestehen. Bogenelemente bieten den Vorteil, daß das vorzuverdichtende Müllmaterial allseits oder zumindest in einem großen Bereich von den Verdichtungselementen umgeben ist, so daß das seitliche Wegdrücken des Müllmaterials verhindert wird.

Vorteilhafterweise wird derjenige Anteil des Müllmaterials, der beim Zuführen in Richtung Aufnahmelochöffnung neben das Aufnahmeloch fällt, mittels der Schiebeeinrichtung in den Bereich der Aufnahmelochöffnung geschoben. Hierdurch ist ein vollständiges Verstopfen des beispielsweise mittels eines Baggers herangeführten Müllmaterials möglich.

Vorteilhafterweise wird als Müllverdrängungseinrichtung zur Ausbildung des Aufnahmelochs ein Tiefenstopfgerät, insbesondere Tiefenrüttler, mit glatter Oberfläche verwendet, da ein derartiges Tiefenstopfgerät Aufnahmelöcher von beträchtlicher Tiefe erzeugen kann.

Zum Verstopfen des Müllmaterials wird dagegen vorteilhafterweise ein Tiefenstopfgerät, insbesondere ein Tiefenrüttler, verwendet, der zumindest in seinem Spitzenbereich Hakenelemente aufweist, die vorzugsweise parallel zur Längsrichtung des Tiefenstopfgeräts ausgerichtet und in radialen Ebenen angeordnet sind. Diese Hakenelemente verhindern, daß das Müllmaterial beim Verstopfen - anstatt, wie gewünscht, senkrecht nach unten - lediglich in die Seitenbereiche des Aufnahmelochs gedrückt wird.

Gemäß einer alternativen Ausführungsform ist es auch möglich, als Müllverdrängungseinrichtung zur Ausbildung des Aufnahmelochs bereits das zum späteren Verstopfen des Müllmaterials vorgesehene Tiefenstopfgerät zu verwenden, so daß ein Auswechseln dieser Elemente nicht erforderlich ist.

Die Erfindung wird nachfolgend anhand der Zeichnung beispielsweise näher erläutert. In dieser zeigen:
- Fig. 1: eine schematische Darstellung von in den Bereich der Öffnung des Aufnahmelochs zugeführtem Müllmaterial vor dem Verstopfen mittels eines Tiefenstopfgeräts,
- Fig. 2: eine schematische Darstellung zur Verdeutlichung des Müllstopfvorgangs,
- Fig. 3 + 4: schematische Darstellungen zur Veranschaulichung des erfindungsgemäßen Verfahrens, bei dem eine seitliche Schiebevorrichtung verwendet wird,
- Fig. 5: schematisch eine Vorrichtung zur Durchführung des erfindungsgemäßen Verfahrens mit einer Schiebeeinrichtung zum Verdichten des Müllmaterials in Seitenansicht und
- Fig. 6: in Vorderansicht ohne Tiefenstopfgerät,
- Fig. 7: eine schematische Draufsicht auf eine alternative Ausführungsform der Schiebeeinrichtung,
- Fig. 8: eine schematische Draufsicht auf eine weitere Ausführungsvariante der Schiebeeinrichtung,
- Fig. 9: schematisch eine Vorrichtung zur Durchführung des erfindungsgemäßen Verfahrens mit einer Schwenkeinrichtung in Form eines Rechens in Seitenansicht und
- Fig. 10: in Vorderansicht ohne Tiefenstopfgerät sowie
- Fig. 11: eine schematische Seitenansicht einer alternativen Vorrichtung, wobei ein Rohrtrichter verwendet wird.

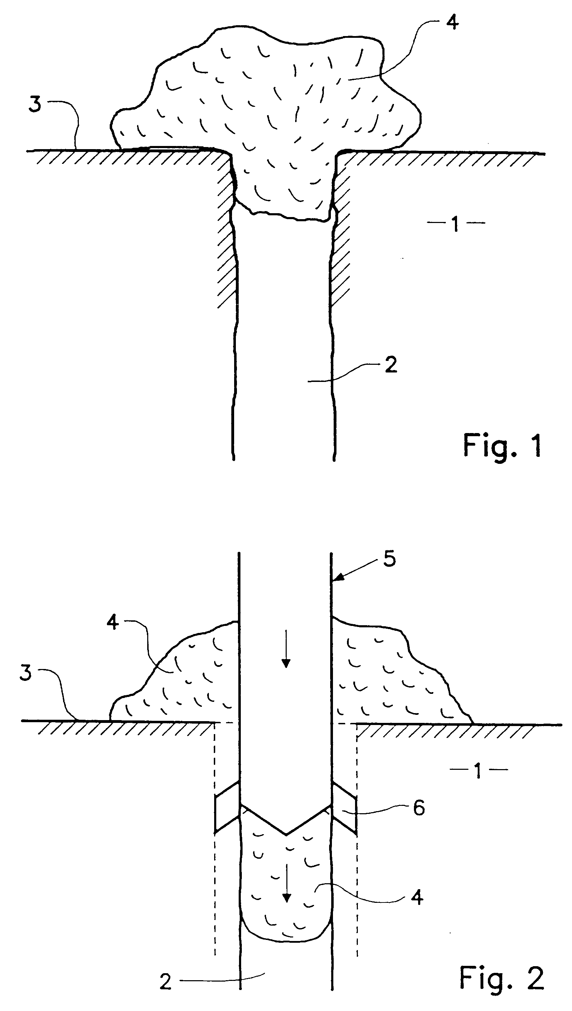

Wie aus Fig. 1 ersichtlich, wird beim erfindungsgemäßen Tiefenstopfen zunächst in einem Deponiekörper 1 ein vorzugsweise vertikales Aufnahmeloch 2 geschaffen. Dies kann beispielsweise mit einem nicht dargestellten Tiefenrüttler erfolgen, welcher mittels eines nicht dargestellten, beispielsweise kranartigen und selbstfahrenden Tragegeräts in die gewünschte Position gebracht wird.

Alternativ hierzu kann das Aufnahmeloch 2 auch durch Einrammen oder Eindrücken eines zylinderförmigen Teils aus einem Rohr- oder Vollmaterial hergestellt werden.

In den Bereich der Öffnung des Aufnahmelochs 2 wird zusätzliches Müllmaterial 4 zugeführt. Da es sich bei diesem Müllmaterial 4 jedoch meist um ein sperriges oder verwobenes Material handelt, bleibt es häufig in der Form eines Müllpfropfens in der Nähe der Deponieoberfläche 3 im Aufnahmeloch 2 hängen, so daß es erforderlich ist, das Müllmaterial 4 in einem weiteren Verfahrensschritt in Richtung des Aufnahmelochtiefsten "hinabzustopfen".

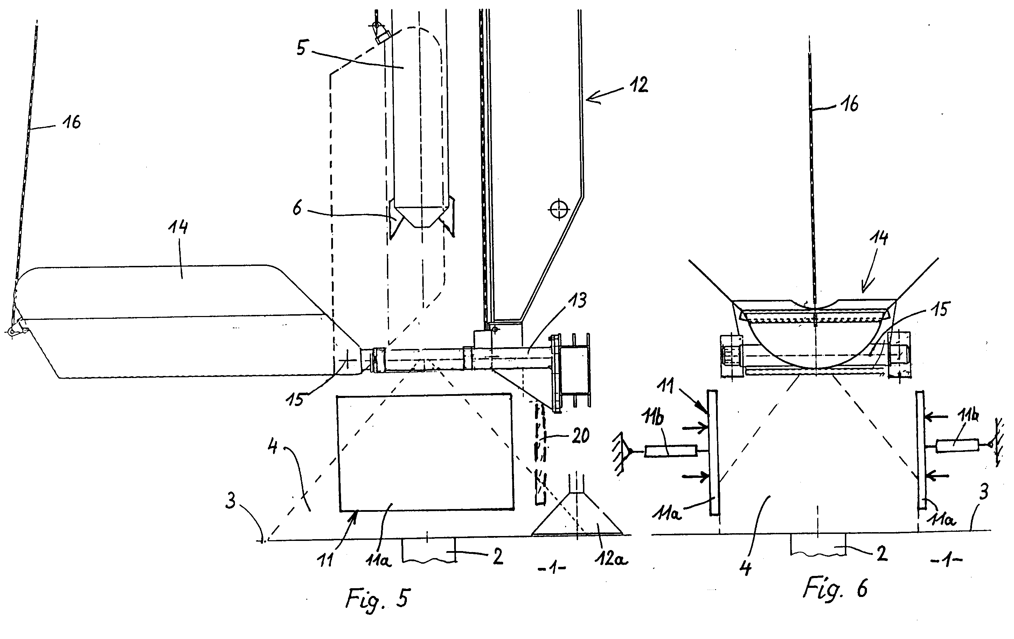

Dieses Verstopfen des Müllmaterials 4 ist in Fig. 2 dargestellt, wobei ein Tiefenstopfgerät 5 verwendet wird, das im Zusammenhang mit den Fig. 5 - 8 noch näher erläutert wird und zweckmäßigerweise aus einem Tiefenrüttler oder einem zylindrischen Teil besteht, das in den Boden eingerammt oder eingedrückt wird.

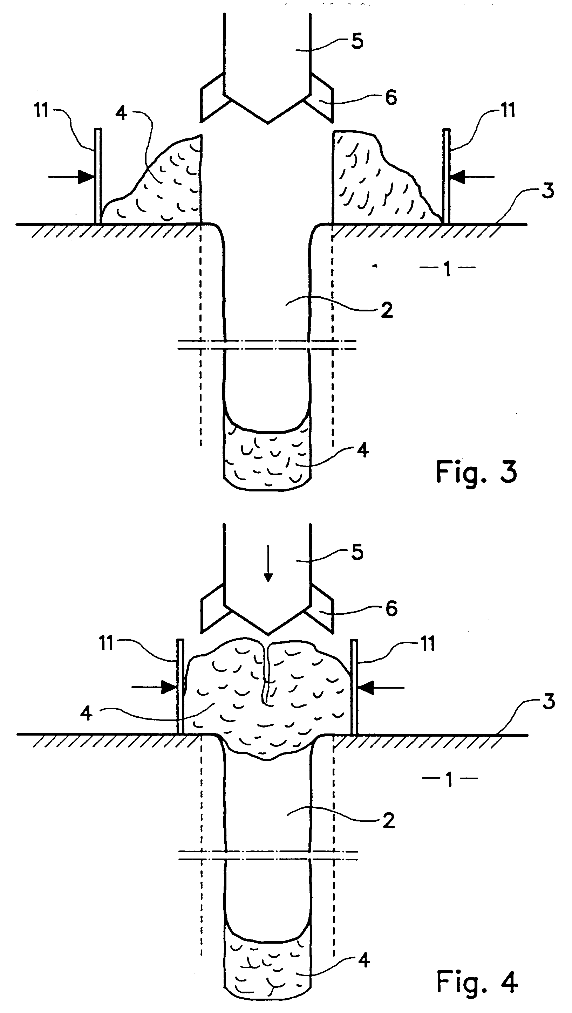

Der Zustand unmittelbar nach dem Hochziehen des Tiefenstopfgeräts 5 ist in Fig. 3 dargestellt. Das Tiefenstopfgerät 5 befindet sich hierbei in einem genügenden Abstand oberhalb der Deponieoberfläche 3, so daß weiteres Müllmaterial 4 der Aufnahmelochöffnung zugeführt werden kann.

Zusätzlich kann, wie aus den Fig. 3 und 4 ersichtlich, eine Schiebeeinrichtung 11 vorgesehen sein, mit deren Hilfe seitlich neben dem Aufnahmeloch 2 liegendes Müllmaterial 4 nach dem Hochziehen des Tiefenstopfgeräts 5 in den Bereich der Aufnahmelochöffnung geschoben werden kann. Diese Schiebeeinrichtung 11 besteht im gezeigten Ausführungsbeispiel aus zwei gegenüberliegenden Platten, die auf gegenüberliegenden Seiten des Aufnahmelochs 2 angeordnet und aufeinander zu- und voneinander wegbewegbar sind.

Im auseinandergefahrenen Zustand, der in Fig. 3 dargestellt ist, verhindern die senkrechten Platten der Schiebeeinrichtung 11, daß größere Mengen von Müllmaterial 4 zu weit seitlich neben das Aufnahmeloch 2 gelangen. Im zusammengefahrenen Zustand der Schiebeeinrichtung 11, der in Fig. 4 dargestellt ist, befindet sich ein wesentlicher Teil des ursprünglich neben dem Aufnahmeloch 2 liegenden Müllmaterials 4 oberhalb der Öffnung des Aufnahmelochs 2 und kann vom Tiefenstopfgerät 5 in einem erneuten Stopfvorgang in die Tiefe gedrückt werden.

Beim Zusammenfahren der Schiebeeinrichtung 11 wird das Müllmaterial 4 zugleich vorverdichtet, wodurch die Effektivität des Stopfverfahrens beträchtlich erhöht werden kann.

Aus den Fig. 5 und 6 ist eine Seiten- bzw. Vorderansicht einer Vorrichtung ersichtich, die zur Durchführung des erfindungsgemäßen Verfahrens eingesetzt werden kann. Das in Fig. 5 dargestellte Tiefenstopfgerät 5 ist hierbei als Tiefenrüttler ausgebildet, der von einer kranartigen Haltevorrichtung 12 in einer senkrechten Ausrichtung geradlinig oberhalb des Aufnahmelochs 2 gehalten werden kann. Die kranartige Haltevorrichtung 12 ist über lediglich schematisch dargestellte Stützpratzen 12a auf der Deponieoberfläche 3 abgestützt.

An Querträgern 13 der Haltevorrichtung 12 ist eine Zufuhreinrichtung in der Form einer langgestreckten, oberseitig offenen Halbrinne 14 endseitig um eine Schwenkachse 15 schwenkbar gelagert. Die Halbrinne 14 kann mittels eines an ihrem freien Ende befestigten Seilzuges 16 zwischen einer horizontalen Lage, die in Fig. 5 mit durchgezogenen Linien dargestellt ist, und einer zumindest im wesentlichen vertikalen Lage geschwenkt werden, die gestrichelt dargestellt ist.

Die Schiebeeinrichtung 11 besteht bei dieser Ausführungsform aus zwei senkrechten, auf gegenüberliegenden Seiten des Aufnahmelochs 2 angeordneten ebenen Platten 11a, die einen dazwischenliegenden Aufnahmebereich für das Müllmaterial 4 begrenzen. Das Müllmaterial 4 ist zwischen den Platten 11a beispielsweise kegelartig aufgeschüttet und in den Fig. 5 und 6 mit gestrichelten Linien dargestellt.

Die Platten 11a sind mittels entsprechender Hydraulikkolben 11b zusammenfahrbar, so daß das dazwischenliegende Müllmaterial 4 oberhalb des Aufnahmelochs 2 zusammengeschoben und verdichtet wird.

Der Schüttbereich des Müllmaterials 4 kann zusätzlich noch durch ein Abschirmblech 20 begrenzt werden, das eine offene Stirnseite des Aufnahmebereichs des Müllmaterials 4 abschließt.

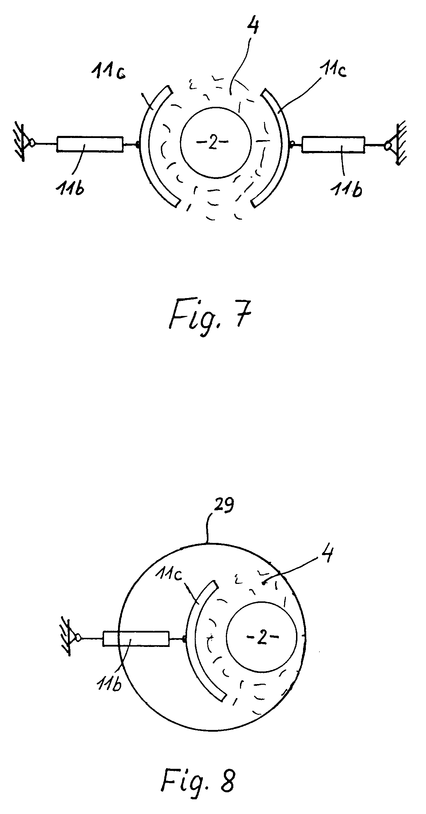

Wie aus Fig. 7 ersichtlich, können statt der ebenen Platten 11a zum Zusammenschieben und Verdichten des Müllmaterials 4 auch konkave, halbschalenförmige Bogenelemente 11c verwendet werden. Diese bieten den Vorteil, daß sie den dazwischenliegenden Müllkegel kreisförmig umgreifen und dadurch die Gefahr eines seitlichen Hinausdrückens des Müllmaterials 4 beim Zusammenschieben der Bogenelemente 11c reduzieren.

Bei der alternativen Ausführungsform von Fig. 8 besteht die Schiebeeinrichtung 11 aus lediglich einem Bogenelement 11c, das mittels eines oder mehrerer Hydraulikzylinder 11b quer zum Aufnahmeloch 2 verfahrbar ist. Das Bogenelement 11c ist innerhalb eines Rohrtrichters 29 angeordnet, welcher auf die Deponieoberfläche 3 oberhalb des Aufnahmelochs 2, jedoch exzentrisch zu diesem, aufgesetzt ist. Der Rohrtrichter 29, dessen Durchmesser größer als derjenige des Aufnahmelochs 2 ist, ist hierbei an einer Wandstelle nah am Rand des Aufnahmelochs 2 angeordnet und wirkt bei einer Bewegung des Bogenelements 11c in Richtung des Aufnahmelochs 2 auf der anderen Seite dieses Aufnahmelochs 2 als Barriere, so daß das dazwischenliegende Müllmaterial 4 oberhalb des Aufnahmelochs 2 verdichtet werden kann.

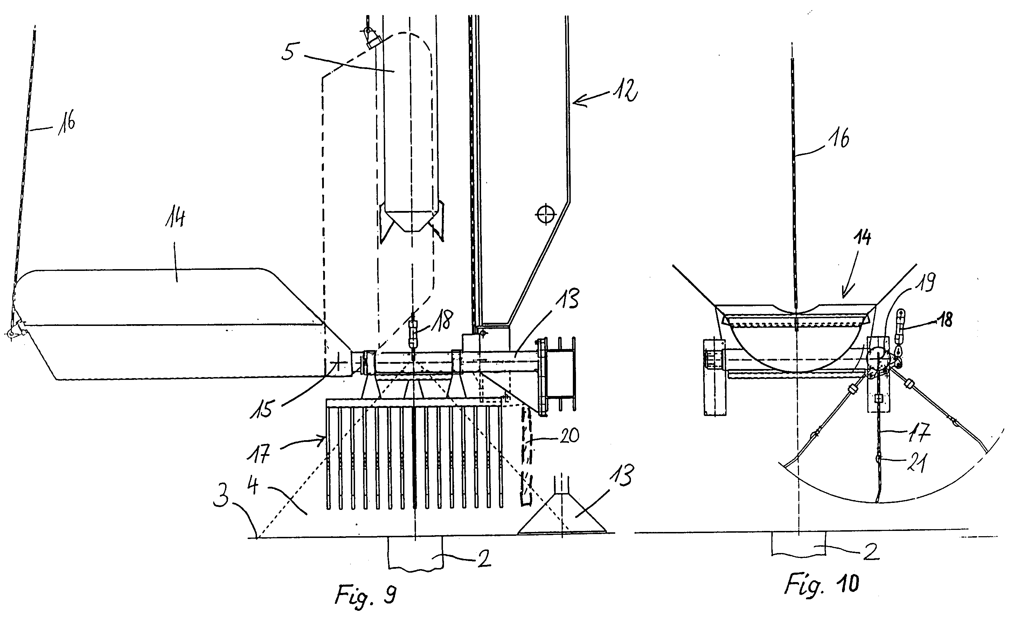

Bei der aus den Fig. 9 und 10 ersichtlichen Ausführungsform sind zwischen der Deponieoberfläche 3 und den Querträgern 13 zwei Schwenkeinrichtungen in der Form von um die Querträger 13 schwenkbaren Rechen 17 vorgesehen. Die Rechen 17 verlaufen parallel zur Längsrichtung der Halbrinne 14 und sind beidseits des Aufnahmelochs 2 vorgesehen, wobei in Fig. 10 aus Vereinfachungsgründen lediglich ein Rechen 17 dargestellt ist. Mittels einer Hydraulikvorrichtung 18 sind die Rechen 17 in einem bestimmten Winkelbereich um eine Schwenkachse 19 schwenkbar, die parallel zur und seitlich neben der Halbrinne 14 vorgesehen ist.

Die Rechen 17 begrenzen zweiseitig den Raum um die Öffnung des Aufnahmelochs 2 herum, so daß das Müllmaterial 4, das in Fig. 9 gestrichelt in Form eines Kegels eingezeichnet ist, im Bereich des Aufnahmelochs 2 gehalten wird. Der Schüttbereich des Müllmaterials 4 kann zusätzlich auch noch durch ein Abschirmblech 20 begrenzt werden, das sich quer zu den beiden Rechen 17 erstreckt.

Das Zuführen von Müllmaterial 4 zum Aufnahmeloch 2 erfolgt derart, daß beispielsweise mittels eines Baggers mit Polypgreifern Müllmaterial in die horizontale Halbrinne 14 eingeführt wird. Anschließend wird die Halbrinne 14 mittels des Seilzugs 16 in die in Fig. 9 gestrichelt dargestellte vertikale Position hochgeschwenkt, so daß das Müllmaterial 4 von der Halbrinne 14 auf die Öffnung des Aufnahmelochs 2 fällt. Anschließend wird die Halbrinne 14 wieder nach unten geschwenkt und steht für eine erneute Befüllung zur Verfügung.

Anschließend wird das Tiefenstopfgerät 5 in das Aufnahmeloch 2 abgesenkt. Hierdurch wird das über der Öffnung des Aufnahmelochs 2 liegende Müllmaterial 4 in das Aufnahmeloch 2 hinuntergedrückt.

Nach Erreichen der tiefsten Position wird das Tiefenstopfgerät 5 wieder hochgezogen und der Aufnahmelochöffnung weiteres Müllmaterial 4 zugeführt. Dies kann entweder über die Halbrinne 14 erfolgen oder über die Rechen 17, die von einer vertikalen oder schräg nach außen stehenden Position nach innen geschwenkt werden und hierdurch das neben dem Aufnahmeloch 2 liegende Müllmaterial 4 in den Bereich der Aufnahmelochöffnung schieben.

Damit beim Zurückschwenken der Rechen 17 das Müllmaterial 4 nicht wieder nach außen mitgenommen wird, weisen die einzelnen Rechenzinken Gelenke 21 auf, die beim Zurückschwenken der Zinken ein Zurückklappen des unteren Zinkenabschnitts ermöglichen.

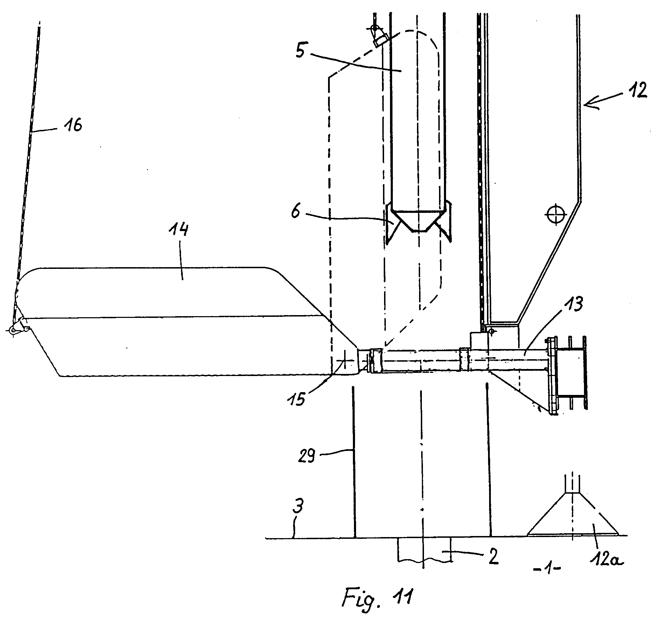

Bei der aus Fig. 11 ersichtlichen Ausführungsform ist in ähnlicher Weise wie in Fig. 8 ein zylinderförmiger Rohrtrichter 29 oberhalb des Aufnahmelochs 2 auf die Deponieoberfläche 3 aufgesetzt. In diesem Fall ist der Rohrtrichter 29 jedoch zentrisch über dem Aufnahmeloch 2 angeordnet, und es befindet sich innerhalb des Rohrtrichters 29 keine Vorverdichtungseinheit in der Form einer Schiebeeinrichtung, wie beispielsweise anhand der Fig. 5 - 8 dargestellt.

Der Rohrtrichter 29 reicht in vertikaler Richtung bis knapp unterhalb der Halbrinne 14, von der aus das Müllmaterial direkt in den Rohrtrichter 29 geschüttet wird.

Alternativ ist es auch möglich, die Schwenkachse 15 der Halbrinne 14 am oberen Rand des Rohrtrichters 29 vorzusehen, d.h. die Halbrinne 14 direkt am Rohrtrichter 29 zu lagern.

Der Rohrtrichter 29 dient als Sammel- und Zuführbehälter für das zu verstopfende Müllmaterial und vermeidet, daß beim Stopfvorgang mittels des Tiefenstopfgeräts 5 das Müllmaterial oberhalb des Aufnahmelochs 2 seitlich weggedrückt werden kann, so daß jeder Stopfvorgang sehr effektiv durchgeführt werden kann.

## Patentansprüche

1. Verfahren zum Nachverdichten des Volumens einer Mülldeponie mit einem in den Deponiekörper mittels Schwingungs- oder Schlagenergie einbringbaren Tiefenstopfgerät zum Ausbilden von Stopfsäulen, die zumindest überwiegend aus Müll bestehen, **gekennzeichnet** durch folgende Schritte:
a) Ausbilden eines Aufnahmelochs (2) im Deponiekörper (1) durch Einrütteln oder Einrammen einer Müllverdrängungseinrichtung von der Deponieoberfläche (3) her und durch anschließendes Ziehen der Müllverdrängungseinrichtung aus dem Aufnahmeloch (2),
b) Zuführen von weiterem Müllmaterial (4) in den Bereich der Öffnung des Aufnahmelochs (2), wobei
c) derjenige Anteil des in den Bereich der Öffnung des Aufnahmelochs (2) zugeführten Müllmaterials (4), der neben dem Aufnahmeloch (2) liegt, mittels einer Schiebe- oder Schwenkeinrichtung (11, 17) in den Bereich des Aufnahmelochs (2) geschoben wird,
d) Vorverdichten des weiteren Müllmaterials (4) vor dem Verstopfen in das Aufnahmeloch (2) und
e) Verstopfen des zugeführten Müllmaterials (4) durch Absenken des Tiefenstopfgeräts (5) in das Aufnahmeloch (2).

2. Verfahren nach Anspruch 1, dadurch gekennzeichnet, daß als Schwenkeinrichtung mindestens ein seitlich neben dem Aufnahmeloch (2) angeordneter schwenkbarer Rechen (17) verwendet wird.

3. Verfahren nach Anspruch 1, dadurch gekennzeichnet, daß als Schiebeeinrichtung (11) mindestens zwei sich gegenüberliegende ebene Platten (11a) oder konkave, insbesondere halbschalenförmige, Bogenelemente (11c) verwendet werden, die quer zur Achse des Aufnahmelochs (2) aufeinander zu- und wegbewegbar sind.

4. Verfahren nach einem der vorhergehenden Ansprüche, dadurch gekennzeichnet, daß das Müllmaterial (4) mittels einer Zufuhreinrichtung gezielt dem Bereich des Aufnahmelochs (2) zugeführt wird, welche vorzugsweise aus einer langgestreckten, oberseitig offenen Halbrinne (14) besteht, die in einer Schräglage angeordnet oder in eine solche bringbar ist.

5. Verfahren nach Anspruch 1, dadurch gekennzeichnet, daß das Vorverdichten des Müllmaterials (4) in Verbindung mit dem Beladen der dem Tiefenstopfgerät (5) zugeordneten Zufuhreinrichtung erfolgt und insbesondere mittels des Polypgreifers eines Baggers oder dgl. beim Aufnehmen des Müllmaterials (4) durchgeführt wird.

6. Verfahren nach Anspruch 1, dadurch gekennzeichnet, daß das Vorverdichten des Müllmaterials (4) mittels der Schiebeeinrichtung (11) erfolgt.

7. Verfahren nach einem der Ansprüche 4 bis 6, dadurch gekennzeichnet, daß die Betätigung der Schiebeeinrichtung (11) durch einen mit der Zufuhreinrichtung verbundenen Auslöser, Schalter oder dgl. gesteuert wird.

8. Verfahren nach einem der vorhergehenden Ansprüche, dadurch gekennzeichnet, daß als Müllverdrängungseinrichtung zur Ausbildung des Aufnahmelochs (2) ein Tiefenstopfgerät, insbesondere ein Tiefenrüttler, mit glatter Oberfläche verwendet wird.

## Claims

1. Process for after-compacting the volume of a refuse dump with an immersion-type stuffing apparatus which can be inserted in the body of the dump by means of oscillating or striking energy for the purpose of constructing stuffing columns which consist, at least predominantly, of refuse, characterised by the following steps:
a) the construction of a receiving hole (2) in the body (1) of the dump by the vibrating-in or ramming-in of a refuse-displacing arrangement from the surface (3) of the dump, and by subsequent pulling of the refuse-displacing arrangement out of the receiving hole (2),
b) the feeding of additional refuse material (4) into the region of the opening of the receiving hole (2), while
c) that portion which lies alongside the receiving hole (2), of the refuse material (4) fed into the region of the opening of the said receiving hole (2), is pushed into the region of the receiving hole (2) by means of a pushing or pivoting arrangement (11, 17),
d) the pre-compacting of the additional refuse material (4) before it is tamped into the receiving hole (2), and
e) the tamping of the refuse material (4) fed in, by the lowering of the immersion-type stuffing apparatus (5) into the receiving hole (2).

2. Process according to claim 1, characterised in that use is made, as the pivoting arrangement, of at least one pivotable rake (17) disposed laterally alongside the receiving hole (2).

3. Process according to claim 1, characterised in that use is made, as the pushing arrangement (11), of at least two mutually opposed flat plates (11a) or concave, in particular half shell-shaped curved elements (11c), which can be moved up to and away from one another, transversely to the axis of the receiving hole (2).

4. Process according to one of the preceding claims, characterised in that the refuse material (4) is fed to the region of the receiving hole (2) in a carefully directed manner by means of a feeding arrangement which preferably consists of an elongated half-chute (14) which is open on the top side and is disposed in an inclined position or can be brought into such a position.

5. Process according to claim 1, characterised in that the pre-compacting of the refuse material (4) is effected in conjunction with the loading of the feeding arrangement associated with the immersion-type stuffing apparatus (5), and is performed, particularly by means of the octopus-type grab of an excavator or the like, when the refuse material (4) is picked up.

6. Process according to claim 1, characterised in that the pre-compacting of the refuse material (4) is effected by means of the pushing arrangement (11).

7. Process according to one of claims 4 to 6, characterised in that the actuation of the pushing arrangement (11) is controlled by a triggering device, switch or the like connected to the feeding arrangement.

8. Process according to one of the preceding claims, characterised in that use is made, as the refuse-displacing arrangement for constructing the receiving hole (2), of an immersion-type stuffing apparatus, particularly an immersion vibrator, with a smooth surface.

## Revendications

1. Procédé de post-compactage du volume d'une décharge, comportant un appareil de bourrage en profondeur susceptible d'être introduit dans le corps de la décharge au moyen d'énergie vibratoire ou de chocs, pour former des colonnes de bourrage qui sont constituées au moins en majeure partie de déchets, caractérisé par les étapes suivantes :
a) on forme un trou de réception (2) dans le corps de déeharge (1) en enfonçant par vibrations ou par battage un dispositif de refoulement de déchets depuis la surface (3) de la décharge et en retirant ensuite le dispositif de refoulement de déchets hors du trou de réception (2),
b) on amène d'autres déchets (4) dans la région de l'ouverture du trou de réception (2),
c) la part des déchets (4) amenée dans la région de l'ouverture du trou de réception (2) et se trouvant à côté du trou de réception (2) est refoulée au moyen d'un dispositif de poussée ou de basculement (11, 17) dans la région du trou de réception,
d) on compacte au préalable les autres déchets (4) avant de les bourrer dans le trou de réception (2), et
e) on bourre les déchets (4) amenés en faisant descendre l'appareil de bourrage en profondeur (5) dans le trou de réception (2).

2. Procédé selon la revendication 1, caractérisé en ce qu'on utilise comme dispositif de basculement au moins un râteau (17) agencé en basculement latéralement à côté du trou de réception (2).

3. Procédé selon la revendication 1, caractérisé en ce qu'on utilise comme dispositif de poussée (11) au moins deux plaques (11a) planes mutuellement opposées ou bien des éléments arqués (11c) concaves, en particulier en forme de demi-coques, lesquels sont susceptibles d'être rapprochés et éloignés l'un de l'autre transversalement à l'axe du trou de réception (2).

4. Procédé selon l'une quelconque des revendications précédentes, caractérisé en ce que les déchets sont amenés de manière ciblée jusque dans la région du trou de réception (2) au moyen d'un dispositif d'amenée qui est constitué de préférence par une demi-goulotte (14) allongée ouverte vers le haut, qui est agencée dans une position oblique ou est susceptible d'être mise dans une telle position.

5. Procédé selon la revendication 1, caractérisé en ce que le précompactage des déchets (4) a lieu en liaison avec le chargement du dispositif d'amenée associé à l'appareil de bourrage en profondeur (5), et est effectué en particulier au moyen du grappin polype d'un excavateur ou similaire lors du ramassage des déchets (4).

6. Procédé selon la revendication 1, caractérisé en ce que le précompactage des déchets (4) a lieu au moyen du dispositif de poussée (11).

7. Procédé selon l'une quelconque des revendications 4 à 6, caractérisé en ce que l'actionnement du dispositif de poussée (11) est commandé par un déclencheur, un commutateur ou similaire relié au dispositif d'amenée.

8. Procédé selon l'une quelconque des revendications précédentes, caractérisé en ce que l'on utilise comme dispositif de refoulement des déchets pour former le trou de réception (2) un appareil de bourrage en profondeur, en particulier un vibreur en profondeur à surface lisse.
